# EUROPEAN PATENT SPECIFICATION

(11) **EP 0 964 146 B1**
(45) Date of publication and mention of the grant of the patent: **12.01.2005**
(21) Application number: 99201501.6
(22) Date of filing: 12.05.1999
(51) Int. Cl.: F02M 21/02, F16K 31/06

(54) **Metering valve and fuel supply system equipped therewith**
Dosierventil und damit ausgerüstetes Kraftstoffversorgungssystem
Valve de dosage et système d'alimentation en carburant comportant une telle valve

(30) Priority: 09.06.1998 NL 1009355; 31.12.1998 EP 98204495
(43) Date of publication of application: 15.12.1999
(73) Proprietor: Teleflex GFI Europe B.V., 4207 HG Gorinchem (NL)
(72) Inventor: Van de Brink, Alfred, 3773 AR Barneveld (NL)
(74) Representative: Bartelds, Erik

(56) References cited:
- WO-A-89/04920
- WO-A-98/08014
- DE-A- 2 615 917
- DE-A- 3 540 997
- DE-B- 2 357 263
- FR-A- 946 891
- GB-A- 1 450 402
- US-A- 4 430 978
- US-A- 4 500 067
- US-A- 5 031 841
- US-A- 5 408 967

## Description

The invention relates to a valve for metering a fluid, according to the preamble of claim 1. Such a metering valve is known and is used for instance in fuel injection systems, particularly systems for injecting gaseous fuel, such as the LPG injection system marketed by applicant under the name DGI.

The document DE 3 540 997 shows a valve of this type.

Current metering valves or vapour injectors are provided with a closing member or plunger which is pulled from the seat by an electromagnet counter to the force of a mechanical spring and which is pressed by the spring back onto the seat after the electromagnetic force has been removed. Because the plunger must be opened counter to a spring force, the force required of the electromagnet is greater than should actually be necessary. Both the electromagnetic coil and the plunger must hereby be embodied disproportionately larger and heavier than would be necessary in the absence of the spring.

The unnecessarily heavy plunger causes problems in respect of the so-called rebounce, i.e. the rebound which occurs when the heavy plunger strikes at great speed against the upper stop at the end of the attractive phase of the electromagnet. This phenomenon of rebounce results in a non-linear and unstable metering behaviour, which is furthermore temperature and injector-dependent. As a result it is not easily possible to produce this type of vapour injector in large numbers with sufficient precision.

In the DGI system of applicant already mentioned above, this problem is solved by using a control of the vapour injector with feedback, whereby variations in the metering behaviour as a result of rebounce are measured and can be corrected by feedback. However, this system is relatively expensive and therefore particularly suitable for group injection or monopoint injection, wherein a single central injector is present for metering of the gas, which is then guided alternately to the desired cylinders via a nozzle.

The invention therefore has for its object to provide an improved metering valve which is simpler, smaller and lighter than the known valve and which can thus be manufactured at lower cost. Such a valve would then be suitable for application in a system of individual injection per cylinder, or a multipoint injection system.

According to the invention this is achieved through the features of claim 1. Preferred embodiments of the metering valve according to the invention form the subject-matter of the dependent claims.

Owing to the pneumatic (or hydraulic) closing of the valve, preferably a diaphragm, optionally in combination with the electromagnetic opening thereof, the use of spring force becomes unnecessary. The coil and the plunger can hereby take a small and light form such that the problem of rebounce no longer occurs. The pneumatic or hydraulic spring is preferably operated by the fluid for metering. By using the fluid itself to operate the valve a simple and robust construction is obtained with relatively few components.

The operating means can advantageously be of electromagnetic type, whereby a simple control is possible. The operating means can herein then comprise a coil with W-shaped armature and at least one metal attraction element connected to the closing member. This attraction element is preferably plate-like. Thus, as a result of the chosen embodiment with the W-shaped armature and flat plunger plate, a relatively small electromagnetic force is required, so that a so-called high-impedance coil can suffice. This has the further consequence that the electrical control can be provided using a simple low side driver, such as is also known from modern petrol injection systems. If the metering behaviour of the valve were made the same as that of a petrol injector, it would even be possible to control the valve directly from the engine management computer of the petrol engine.

The closing member is preferably formed by a diaphragm. Such a diaphragm is light and of simple construction and can be operated with little force. The diaphragm then advantageously has a relatively stiff central portion co-acting with the opening for closing, and a relatively flexible edge portion. A good sealing and yet easy deformability of the diaphragm are thus obtained simultaneously.

The closing member can be accommodated in a housing which has on either side of the closing member at least one supply opening connected to a feed conduit for the fluid for metering. The closing member can thus be operated by admitting fluid on either side thereof. The supply openings are preferably dimensioned herein such that the fluid pressure in the housing on the side of the closing member directed toward the opening for closing is lower than the pressure on the opposite side thereof.

The invention further also relates to a system for supplying fuel to a combustion engine, provided with a container for the fuel and at least one feed line connecting the container to the engine, in which line is received at least one metering valve of the above described type. The engine herein preferably has a number of combustion chambers and at least one metering valve is present for each combustion chamber. A precisely operating multipoint injection system is thus obtained which can be manufactured in simple manner and at low cost.

The invention will now be elucidated on the basis of an embodiment, wherein reference is made to the annexed drawing, in which:
fig. 1 is a cross-sectional perspective view of a metering valve according to the invention, and
fig. 2 shows schematically the structure of a fuel supply system in which such a metering valve is arranged for each cylinder.

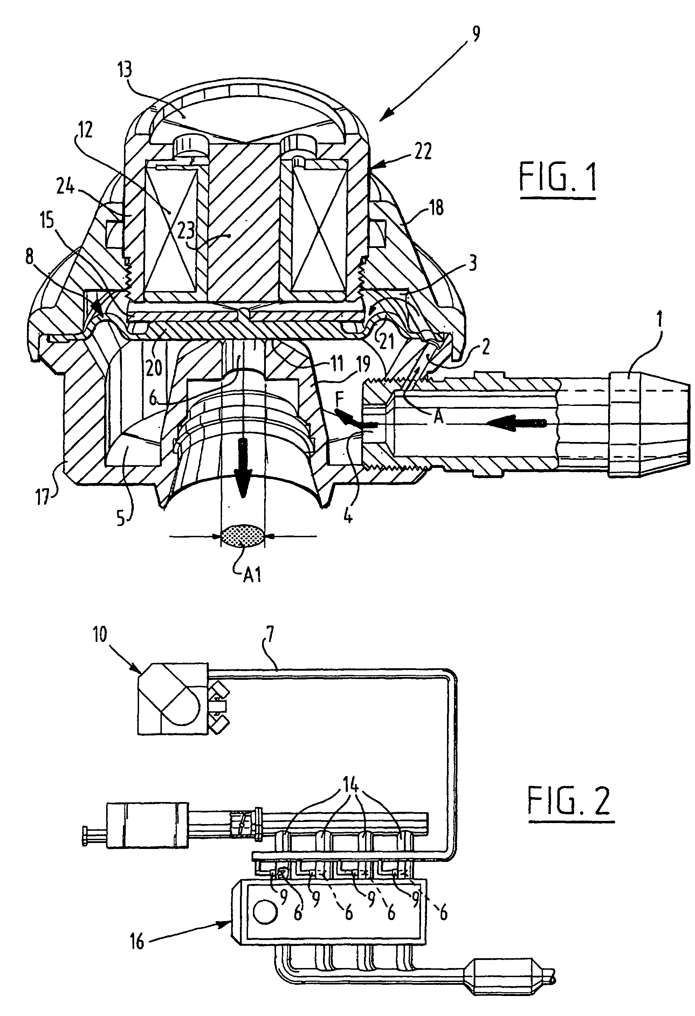

A metering valve 9 (fig. 1) comprises a housing which consists of a base part 17 and a cover 18 placed sealingly thereon. A closing member 8 is arranged between cover 18 and base part 17 whereby the interior of the housing is divided into a control chamber 3 and a through-flow chamber 5. This through-flow chamber 5 is connected to a gas supply line 1 and a gas discharge line (not shown here). The gas discharge line is herein received in a connecting piece 19 to which through-flow chamber 5 is connected via an outlet opening 6. Around this outflow opening 6 is formed an annular valve seat 11 against which closing member 8 lies sealingly.

Closing member 8 here takes the form of a circular plastic diaphragm with a relatively stiff central portion 20 which co-acts with seat 11 around outlet opening 6 and a relatively flexible edge portion 21 situated round central portion 20. This edge portion 21 takes a curved form in cross-section, whereby it allows relatively large movements of central portion 20. Fixed onto central portion 20 is a plate-like metal attraction element 15 which forms part of the operating means for closing member 8. These operating means further comprise an electromagnet 22 formed by an armature 13 and a coil 12 wound therearound. Armature 13 herein comprises a core 23 and a cylindrical part 24 and therefore has in cross-section the form of a reverse W-shape or a pair of reverse U-shapes.

Both through-flow chamber 5 and control chamber 3 lying thereabove are connected to gas supply line 1. Recessed for this purpose in the wall of base part 17 and in the wall of cover 18 is a branch line 2 through which the fluid supplied through line 1 can flow to the control chamber. Further arranged between gas supply line 1 and through-flow chamber 5 is a narrowed passage or 'throttle' 4, the function of which is described below.

The metering valve 9 according to the invention now operates as follows. Vaporous fuel is supplied from an evaporator 10 via a conduit 7 (fig. 2) to the gas supply line 1 and flows via passage 4 to through-flow space 5 beneath closing member 8. A part of the fuel simultaneously flows through branch channel 2 to control space 3 above diaphragm 8. The same gas pressure herein prevails on either side of diaphragm 8. On the upper side this pressure acts on the entire surface area of the diaphragm but on the underside only on the part of diaphragm 8 outside the seat 11. As a consequence of the thereby created difference in area A1, a closing force is generated whereby closing member 8 is pressed onto seat 11 and held fixedly in a position closing off outlet opening 6 of valve 9.

When the coil 12 of the electromagnet above closing member 8 is energized, an electromagnetic force is created between the armature 13 of coil 12 and the metal plate 15 fixed onto closing member 8. Closing member 8 is hereby pulled against armature 13 and outlet opening 6 is left clear. The vaporous fuel then flows from supply line 1 via passage 4 to outlet opening 6, which debouches via the discharge line (not shown) into the inlet manifold 14 of an associated cylinder of a combustion engine 16.

The narrowed passage 4 herein functions as 'throttle' or differential pressure regulator, whereby as a result of the flow of the fuel a pressure difference is generated between the through-flow chamber 5 beneath the diaphragm-like closing member 8 and the control chamber 3 thereabove. The downward directed suction force which is the result of the pressure difference is however overcome in this situation by the upward directed force which electromagnet 22 exerts on closing member 8. As soon as coil 12 is no longer energized however, the downward directed suction force immediately results in a downward directed displacement of closing member 8 to seat 11, whereby opening 6 is closed.

As a result of the simple and therefore low-cost construction thereof, the above described metering valve 9 can, as stated, be used advantageously in a system of individual injection per cylinder, i.e. a multipoint injection system as shown in fig. 2. It is however also conceivable to apply valve 9 as single metering valve in a system with central fuel injection.

The invention is not limited to the above discussed embodiments and the scope of the invention is therefore defined solely by the following claims.

## Claims

1. Valve (9) for metering a fluid, comprising a housing connected to a fluid supply line (1) and including at least one metering opening (6) and at least one closing member (8) which is movable in the housing between a position closing the metering opening (6) and a position leaving the opening (6) at least partially clear, the closing member (8) being biased by at least one pneumatic or hydraulic spring co-acting therewith to its closed position and being arranged to be placed in the other position counter to the bias by operating means, the pneumatic or hydraulic spring being driven by the fluid for metering and comprising two chambers (3, 5) arranged in the housing and separated by the closing member (8), each chamber (3, 5) having at least one supply opening connected to the fluid supply line (1), the fluid supply line (1) being connected to the housing at the same side of the closing member (8) as the metering opening (6), the chamber (5) at that side of the closing member (8) forming a through-flow chamber and the chamber (3) at the opposite side of the closing member (8) constituting a control chamber, the supply openings in the chambers (3, 5) being dimensioned such that the pressure of the fluid in the through-flow chamber (5) is lower than the pressure in the control chamber (3), characterize in that the valve (9) is configured such that the closing member (8) is biased to its closed position solely by the pneumatic or hydraulic spring.

2. Metering valve (9) as claimed in claim 1, **characterized in that** the supply opening in the through-flow chamber (5) is connected to the fluid supply line (1) through a narrowed passage (4).

3. Metering valve (9) as claimed in claim 1 or 2, **characterized in that** the supply opening in the control chamber (3) is connected to the fluid supply line (1) through a branch line (2) arranged in a wall of the housing.

4. Metering valve (9) as claimed in any of the preceding claims, **characterized in that** the closing member (8) is a diaphragm.

5. Metering valve (9) as claimed in claim 4, **characterized in that** the diaphragm (8) comprises a relatively stiff central portion (20) co-acting with the metering opening (6) and a relatively flexible edge portion (21).

6. Metering valve (9) as claimed in any of the preceding claims, **characterized in that** the operating means are of electromagnetic type.

7. Metering valve (9) as claimed in claim 3, **characterized in that** the operating means comprise a coil (12) with W-shaped armature (13) and at least one metal attraction element (15) connected to the closing member (8).

8. Metering valve (9) as claimed in claim 7, **characterized in that** the attraction element (15) is plate-like.

9. System for supplying fuel to a combustion engine (16), provided with a container for the fuel and at least one feed line connecting the container to the engine (16), in which line is received at least one metering valve (9) as claimed in any of the preceding claims.

10. Fuel supply system as claimed in claim 9, **characterized in that** the engine (16) has a number of combustion chambers and at least one metering valve (9) is present for each combustion chamber.

## Patentansprüche

1. Ventil (9) zum dosieren einer Flüssigkeit, welches ein mit einer Flüssigkeitsversorgungsleitung (1) verbundenes Gehäuse umfasst und wenigstens eine Dosieröffnung (6) und wenigstens ein Verschlusselement (8) aufweist, das in dem Gehäuse bewegbar ist zwischen einer die Dosieröffnung (6) verschließenden Stellung und einer die Öffnung (6) zumindest teilweise offenlassenden Stellung, wobei das Verschlusselement (8) mittels wenigstens einer mit ihm in Bezug auf seine geschlossene Stellung zusammenwirkenden pneumatischen oder hydraulischen Feder vorgespannt ist und so angeordnet ist, dass es mittels von Betätigungsmitteln in die andere Stellung entgegen der Vorspannung eingestellt wird, wobei die pneumatische oder hydraulische Feder betrieben wird durch die Messflüssigkeit und zwei Kammern (3, 5) umfasst, die in dem Gehäuse angeordnet und durch das Verschlusselement (8) voneinander getrennt sind, wobei jede Kammer (3, 5) wenigstens eine mit der Flüssigkeitsversorgungsleitung (1) verbundene Versorgungsöffnung hat, wobei die Flüssigkeitsversorgungsleitung (1) auf derselben Seite des Verschlusselements (8) mit dem Gehäuse verbunden ist wie die Dosieröffnung (6), wobei die Kammer (5) auf dieser Seite des Verschlusselements (8) als Durchflusskammer gestaltet ist und die Kammer (3) auf der gegenüberliegenden Seite des Verschlusselementes (8) eine Steuerkammer darstellt, wobei die Versorgungsöffnungen in den Kammern (3, 5) so dimensioniert sind, dass der Druck der Flüssigkeit in der Durchflusskammer (5) niedriger ist als der Druck in der Steuerkammer (3), **dadurch gekennzeichnet, dass** das Ventil (9) so gestaltet ist, dass das Verschlusselement (8) allein durch die pneumatische oder hydraulische Feder in Bezug auf seine geschlossene Stellung vorgespannt ist.

2. Dosierventil (9) gemäß Anspruch 1, **dadurch gekennzeichnet, dass** die Versorgungsöffnung in der Durchflusskammer (5) mittels eines verengten Durchlasses (4) mit der Flüssigkeitsversorgungsleitung (1) verbunden ist.

3. Dosierventil (9) gemäß Anspruch 1 oder 2, **dadurch gekennzeichnet, dass** die Versorgungsöffnung in der Steuerkammer (3) mit der Flüssigkeitsversorgungsleitung (1) mittels einer in der Gehäusewand angeordneten Zubringerleitung (2) verbunden ist.

4. Dosierventil (9) gemäß einem der vorhergehenden Ansprüche, **dadurch gekennzeichnet, dass** das Verschlusselement (8) eine Federplatte ist.

5. Dosierventil (9) gemäß Anspruch 4, **dadurch gekennzeichnet, dass** die Federplatte (8) ein relativ starres, mit der Dosieröffnung (6) zusammenwirkendes Mittelstück (20) und ein relativ flexibles Randstück (21) umfasst.

6. Dosierventil (9) gemäß einem der vorhergehenden Ansprüche, **dadurch gekennzeichnet, dass** die Betätigungsmittel elektromagnetischer Art sind.

7. Dosierventil (9) gemäß Anspruch 3, **dadurch gekennzeichnet, dass** die Betätigungsmittel eine Spule (12) umfassen mit W-förmigem Anker (13) und wenigstens ein Metall anziehendes Element (15), welches mit dem Verschlusselement (8) verbunden ist.

8. Dosierventil (9) gemäß Anspruch 7, **dadurch gekennzeichnet, dass** das anziehende Element (15) plattenartig ist.

9. System zur Versorgung eines Verbrennungsmotors (16) mit Kraftstoff, ausgestattet mit einem Behältnis für den Kraftstoff und wenigstens einer das Behältnis mit dem Motor (16) verbindenden Zuleitung, in die wenigstens ein gemäß einem der vorhergehenden Ansprüche beanspruchtes Dosierventil (9) aufgenommen ist.

10. Kraftstoffversorgungssystem gemäß Anspruch 9, **dadurch gekennzeichnet, dass** der Motor (16) mehrere Verbrennungskammem hat und wenigstens ein Dosierventil (9) für jede Verbrennungskammer vorhanden ist.

## Revendications

1. Soupape (9) permettant de doser un fluide, comprenant un logement raccordé à une conduite d'alimentation de fluide (1) et comprenant au moins une ouverture de dosage (6) et au moins un élément de fermeture (8) qui est mobile dans le logement entre une position fermant l'ouverture de dosage (6) et une position laissant l'ouverture (6) au moins partiellement ouverte, l'élément de fermeture (8) étant sollicité au moins par un ressort pneumatique ou hydraulique coagissant avec lui jusqu'à sa position fermée et étant agencé pour être placé dans l'autre position contre la sollicitation grâce à des moyens d'actionnement, le ressort pneumatique ou hydraulique étant entraîné par le fluide pour doser et comprenant deux chambres (3, 5) agencées dans le logement et séparées par l'élément de fermeture (8), chaque chambre (3, 5) ayant au moins une ouverture d'alimentation raccordée à la conduite d'alimentation de fluide (1), la conduite d'alimentation de fluide (1) étant raccordée au logement du même côté de l'élément de fermeture (8) que l'ouverture de dosage (6), la chambre (5) du côté de l'élément de fermeture (8) formant une chambre d'écoulement et la chambre (3) du côté opposé de l'élément de fermeture (8) constituant une chambre de commande, les ouvertures d'alimentation dans les chambres (3, 5) étant dimensionnées de sorte que la pression du fluide dans la chambre d'écoulement (5) est inférieure à la pression présente dans la chambre de commande (3), **caractérisée en ce que** la soupape (9) est configurée de sorte que l'élément de fermeture (8) est sollicité vers sa position fermée uniquement par le ressort pneumatique ou hydraulique.

2. Soupape de dosage (9) selon la revendication 1, **caractérisée en ce que** l'ouverture d'alimentation située dans la chambre d'écoulement (5) est raccordée à la conduite d'alimentation de fluide (1) par un passage rétréci (4).

3. Soupape de dosage (9) selon la revendication 1 ou 2, **caractérisée en ce que** l'ouverture d'alimentation dans la chambre de commande (3) est raccordée à la conduite d'alimentation de fluide (1) par un branchement (2) agencé dans une paroi du logement.

4. Soupape de dosage (9) selon l'une quelconque des revendications précédentes, **caractérisée en ce que** l'élément de fermeture (8) est un diaphragme.

5. Soupape de dosage (9) selon la revendication 4, **caractérisée en ce que** le diaphragme (8) comprend une partie centrale relativement rigide (20) coagissant avec l'ouverture de dosage (6) et une partie de bord relativement flexible (21).

6. Soupape de dosage (9) selon l'une quelconque des revendications précédentes, **caractérisée en ce que** les moyens d'actionnement sont du type électromagnétique.

7. Soupape de dosage (9) selon la revendication 3, **caractérisée en ce que** les moyens d'actionnement comprennent une bobine (12) avec une armature en forme de W (13) et au moins un élément d'attraction métallique (15) raccordé à l'élément de fermeture (8).

8. Soupape de dosage (9) selon la revendication 7, **caractérisé en ce que** l'élément d'attraction (15) est en forme de plaque.

9. Système permettant d'alimenter du carburant à un moteur à combustion (16), prévu avec un récipient pour le carburant et au moins une conduite d'alimentation raccordant le récipient au moteur (16), et cette conduite reçoit au moins une soupape de dosage (9) selon l'une quelconque des revendications précédentes.

10. Système d'alimentation de carburant selon la revendication 9, **caractérisé en ce que** le moteur (16) possède un certain nombre de chambres de combustion et au moins une soupape de dosage (9) est présente pour chaque chambre de combustion.
